# EUROPEAN PATENT APPLICATION

(11) **EP 4 621 007 A1**
(43) Date of publication of application: **24.09.2025**
(21) Application number: 25164619.6
(22) Date of filing: 19.03.2025
(51) Int. Cl.: C08L 53/02, C09D 153/02, C08L 93/04, C08J 3/09, C08J 3/11, C08K 5/01

(54) **POLYMER COMPOSITION AND METHODS OF PREPARATION THEREOF**

(30) Priority: 19.03.2024 US 202463566970 P
(71) Applicant: Kraton Polymers Nederland B.V., 1322 CE Almere (NL)
(72) Inventor: GRANT, Stephanie, Houston, 77084 (US); NEUMANN, Brett, Houston, 77084 (US)
(74) Representative: Henkel & Partner mbB

(57) **Abstract**

The disclosure relates to a polymer composition comprising a styrenic block copolymer, a tackifier and at least an additive. The styrenic block copolymer is fully dissolved in a solvent system containing a first solvent and a decarboxylated rosin as a co-solvent in a ratio of 20:80 to 80:20. The styrenic block copolymer includes unhydrogenated styrenic block copolymers, partially hydrogenated styrenic block copolymer, fully hydrogenated styrenic block copolymer, and mixtures thereof. The polymer composition exhibits a higher softening point and reduced vertical slump at room temperature after 6 to 24 hours. The polymer composition is suitable for use in adhesives, sealants, and coating applications.

## Description

### FIELD

The present disclosure relates to a polymer composition comprising a styrenic block copolymer (SBC) in a solvent system with a bio-based material as a co-solvent, methods of preparation, and applications thereof.

### BACKGROUND

It is well-known that polymers have different solubility characteristics. It is also known that many polymeric materials may be dissolved in or dispersed on the molecular level to form a gel, with an appropriate solvent system. There should be a high mutual compatibility between the polymeric material and the solvent system for dissolution.

The emphasis has been placed on finding solvents that will dissolve polymers at room temperature and atmospheric pressure. Dissolution or gel formation is typically accomplished by contacting the polymer and the solvent at ambient to relatively elevated temperatures. It is known that an increase in temperature will speed up the dissolution of the polymer, as there is an increase in surface area by comminution of the polymer into relatively small particles.

Solvent-based compositions are used to adhere one polymer article to another polymer article, or to bond polymer articles to other substrates. These compositions generally work by providing a polymer composition in solution. A problem often encountered when bonding polymer articles together or to other substrates is the incompatibility of the materials, due to low solubility.

There is a still need for improved polymer compositions and solvent systems with excellent polymer compatibility for effective solubilizing capability, low volatile organic compounds (VOCs), low odor, and better performance.

### SUMMARY

In one aspect, a polymer composition comprises, consists, or consists essentially of: at least a styrenic block copolymer (SBC) in an amount of 5-87 wt. %, 12-60 wt.% of a tackifier, 0.1-35 wt. % of at least an additive. The SBC is fully dissolved at a rate of > 90 wt.% in a solvent system. The solvent system contains a first solvent selected from aromatic hydrocarbons, aliphatic hydrocarbons, esters, alcohols, ketones, and mixtures thereof, and a decarboxylated rosin (DCR) as a cosolvent, at a DCR to first solvent weight ratio of 20:80 to 80:20. DCR is characterized as having one or more C=C groups, > 50 wt.% tricyclic aromatic and tricyclic cycloaliphatic compounds, based on total weight of the DCR, > 15 wt. % tricyclic cycloaliphatic compound, based on total weight of the DCR, and 40 to 100 wt.% of tricyclic aromatic and tricyclic cycloaliphatic compounds have 18 to 20 carbon atom. SBC is selected from the group consisting of: unhydrogenated styrenic block copolymer, partially hydrogenated styrenic block copolymer (p-HSBC), hydrogenated styrenic block copolymer (HSBC), and mixtures thereof.

In a second aspect, the SBC has a configuration selected from the group consisting of: A-B, A-B-A, (A-B)ₙX, (A-B-A)ₙX, and mixtures thereof, wherein each A block is derived from a vinyl aromatic monomer, and each B block is derived from a conjugated diene monomer n is a positive integer, X is a residue of a coupling agent.

In a third aspect, the SBC is a hydrogenated styrenic block copolymer having a general configuration selected from the group consisting of: S-E/B-S, S-EP, S-E/B, S-EP-S, and mixtures thereof. Each S block is derived from a vinyl aromatic monomer, each E/B block is an ethylene-butylene block and each EP block is an ethylene-propylene block.

In a fourth aspect, the SBC has a solubility of < 90 wt.% in the first solvent.

### DESCRIPTION

The following terms will be used throughout the specification.

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C".

"Any of A, B, or C" refers to one option from A, B, or C.

"Any of A, B, and C" refers to one or more options from A, B, and C.

"Block" as used herein refers to a section of a polymer molecule that comprises a plurality of identical constitutional units (monomers) and possesses at least one constitutional or configurative feature that does not appear in the immediately adjacent sections (blocks).

"Copolymer" refers to a polymer derived from more than one species of monomer.

"Block copolymer" refers to a copolymer that comprises more than one species of monomer, wherein the monomers are present in blocks. Each block is constituted of a set of monomer units different from the set of monomers of the connected surrounding blocks in the same block copolymer. Each block can be constituted of a homopolymer or a random copolymer.

"Polystyrene content" or PSC of a block copolymer refers to the weight % of vinyl aromatic, e.g., styrene in the block copolymer, calculated by dividing the sum of molecular weight of all vinyl aromatic units by the total molecular weight of the block copolymer. PSC can be determined using any suitable methodology such as proton nuclear magnetic resonance (1H NMR).

"Vinyl content" refers to the content of a conjugated diene that is polymerized via 1,2-addition in the case of butadiene, or via 3,4-addition in case of isoprene, resulting in a monosubstituted olefin, or vinyl group, adjacent to the polymer backbone. Vinyl content can be measured by proton nuclear magnetic resonance (1H NMR).

"Butylene unit content" refers to the content, in weight %, of the butylene units ("B") relative to all diene-based units in a given polymer (e.g., hydrogenated block copolymer). The butylene units are formed through the polymerization of 1,3-butadiene monomer via 1,2-addition, followed by hydrogenation. The 1,3-butadiene monomer can also polymerize through 1,4-addition, which, upon hydrogenation, results in ethylene units ("E"). Both butylene and ethylene units can be present in the hydrogenated block copolymer, which can also contain vinyl aromatic units and/or other units derived from conjugated diene monomers, arranged in any order. The butylene unit content can be measured by 1H NMR and ¹³C NMR.

"Molecular weight" or M_{w} refers to the polystyrene equivalent molecular weight in kg/mol of a polymer block or a block copolymer. M_{w} can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. M_{w} of polymers measured using GPC are polystyrene equivalent molecular weights or apparent molecular weights, measured at the peak of the GPC trace, and commonly referred to as polystyrene equivalent "peak molecular weights," designated as Mₚ. Individual GPC block M_{w} can be calculated by the difference of Mₚ measured before and after the considered block polymerization. For example, M_{w} of block B is the Mₚ of species A-B minus the Mₚ of block A.

"Bio-based" refers to products wholly or partly derived from biomass, e.g., plants, trees, vegetables, animals, etc.

Molecular weight (MW) of compounds or components / species in DCR can be determined by MS (mass spectroscopy), preferably in combination with a chromatographic separation method like GC (gas chromatography) or HPLC (high performance liquid chromatography). In embodiments, the MW of DCR is determined by GC-MS, using a column with a highly-substituted cyanopropyl phase (e.g. Supelco SP-2330, Restek rtx-2330, or Agilent HP-88) of the size 30m × 0.25mm × 0.20µm, with the following operating parameters: a temperature profile of 100°C for 5.0 min, heating with 5°C/min to 250°C and holding this temperature for 10.00 min; forming a solution with 10 mg of compound in 1 ml of a suitable solvent such as toluene, cyclohexane, etc.; injecting 1µl of the solution with a split ratio of 1:40 at 250°C; maintaining the flow at 1 ml/min throughout the analysis. Identification of the individual components is performed by QMS (quadrupole mass spectrometry) detector, with an ion source temperature of 200°C and a mass range of 35 - 500 amu.

"Hydrocarbon" refers to an organic compounds or radicals consisting exclusively of the elements carbon and hydrogen. These moieties include alkyl, alkenyl, alkynyl, and aryl moieties. These moieties additionally include alkyl, alkenyl, alkynyl, and aryl moieties substituted with other aliphatic or cyclic hydrocarbon groups, such as alkaryl, alkenaryl, and alkynaryl. They can be straight chain, branched, or cyclic.

"Compatible" refers to an ability of the solvent-based composition to form a solution or dispersion that does not form inseparable phases at operating conditions. For instance, at room temperature, the components may separate but upon mild heating with slow stirring at 35-55°C, the components form a homogeneous solution or a stable dispersion.

"Dissolved" refers the dissolution of a base polymer in a solvent.

"Partial solubility" refers to situations when a base polymer does not fully dissolve, but some portion dissolves, while the rest remains undissolved (as visible particles, gels, or turbidity). A polymer is considered partially soluble when 10-90 wt.% of the base polymer dissolves in the solvent.

"Full solubility" refers to a polymer's ability to fully dissolve in a solvent, forming a homogeneous solution with > 90 wt.%, or 95 wt.%, or 98 wt.%, or 99 wt.% of the base polymer dissolved in the solvent.

"Temperature-dependent dissolution" refers to a process where at room temperature, the polymer components may separate but upon heating mildly to approximately 35-55°C or more, the polymer components form a homogeneous solution.

"Solubility Parameter" or (δ) of a solvent or polymer refers to the square root of the vaporization energy (ΔE) divided by its molar volume (V), as in the equation δ = (ΔE/V)^{1/2}. The more similar the solubility parameters of two substances, the higher will be the solubility between them and hence the expression "like dissolves like." Hansen established that the solubility parameter of a solvent or polymer is the result of the contribution of three types of interactions: dispersion forces (δ_{D}²), polar interactions (δ_{P}²) and hydrogen bonds (δ_{H}²) (Hansen, 2007; Hansen, 1967), with the total solubility (Hildebrand) parameter δT defined as: δ_{T} = (δ²_{D} + δ²_{P} + δ²_{H} )^{½}. The Hildebrand solubility parameter is expressed as (cal/cm³)^{1/2}.

As used herein, a "polymer composition" is not necessarily limited to sealant applications, the polymer composition can be used for other applications such as adhesive, coating, etc.

The disclosure relates to a solvent-based polymer composition comprising, consisting essentially of, or consisting of: (a) a styrenic block copolymer (SBC) selected from an unhydrogenated styrenic block copolymer, a partially hydrogenated styrenic block copolymer (p-HSBC), a fully hydrogenated styrenic block copolymer (HSBC), and mixtures thereof, (b) a tackifier, and (c) at least an additive. The SBC is fully dissolved in a solvent system containing a hydrocarbon-based solvent as a first solvent, selected from aromatic / aliphatic hydrocarbons, esters, alcohols, ketones, and mixtures thereof, and a decarboxylated rosin (DCR) as a co-solvent. The composition can be used in applications including adhesive, sealant, and coating.

(Styrenic Block Polymer): The SBC component in the polymer composition can be any of unhydrogenated, hydrogenated, partially hydrogenated, selectively hydrogenated SBC and mixtures thereof.

In embodiments, the SBC is any of a linear or branched (multi-armed) block copolymer, comprising at least one polymer block A derived from a vinyl aromatic monomer, and at least one polymer block B derived from a conjugated diene monomer. The vinyl aromatic monomer can be introduced or copolymerized into the conjugated diene blocks in any order and in any distribution.

In embodiments, the SBC has a structure selected from the group of A-B, A-B-A, (A-B)ₙX, A-B-B', (A-B-B')ₙX, A-I-B-I-A, (A-I-B)ₙ-X and mixtures thereof, wherein n is a positive integer, X is a residue of a coupling agent, and each I is predominantly a polymer block of polymerized isoprene monomer. In embodiments, the polymer blocks B and B' are same or different and are selected from the group of polybutadiene, poly(isoprene-r-butadiene), and poly(butadiene-r-styrene), wherein the -r- refers to a random copolymer, e.g., "poly(isoprene-r-butadiene)" means polyisoprene butadiene random copolymer.

In embodiments, the vinyl aromatic monomer is selected from the group of styrene, alpha-methyl styrene, methyl styrene, para-methyl styrene, ethyl styrene, propyl styrene, butyl styrene, tert-butyl styrene, dimethyl styrene, vinyl toluene, isomers of vinyl toluene, vinyl xylene, 1,1-vinyl biphenyl, vinyl naphthalene, vinyl anthracene, and mixtures thereof.

In embodiments, the conjugated diene monomer is selected from the group of 1,3-butadiene, isoprene, 2,3-dimethyl-1,3-butadiene, 1-phenyl-1,3-butadiene, 1,3-pentadiene, 1,3-hexadiene, 3-butyl-1,3-octadiene, myrcene, farnesene, 1,3-cyclohexadiene, piperylene, and mixtures thereof.

In embodiments, each polymer block B and B' has the polymerized 1,3-butadiene monomer in an amount of > 80, or > 85, or > 90, or > 95, or up to 100 wt.%, based on the total weight of the polymerized 1,3-butadiene monomer.

In embodiments, each polymer block B and B', the polymerized 1,3-butadiene monomer has a vinyl content, before hydrogenation, of 48 - 95, or 50 - 90, or 55 - 85, or 60 - 85 %, or > 55, or < 90 % wt.%, based on the total weight of the polymerized 1,3-butadiene monomer.

In embodiments, the polymer block A derived from the polymerized vinyl aromatic monomer is essentially left non-hydrogenated and the polymer block B and or B' based on the polymerized conjugated diene monomer is hydrogenated. In embodiments, the polymer block A has a hydrogenation level of < 30, or < 20, or < 10, or < 5 mol. %, based on the total mol of the polymerized vinyl aromatic monomer. In embodiments, the conjugated diene has a hydrogenated level of > 70, or > 80, or > 90, or > 95, or > 98, or > 99 mol%, based on the total mol of the polymerized conjugated diene monomer. The hydrogenation level refers to the % of original unsaturated bonds which become saturated upon hydrogenation, that can be determined using UV-VIS spectrophotometry and / or 1HNMR and/ or via ozonolysis titration.

In embodiments, the SBC is selected from the group of styrene-butadiene (SB), styrene-butadiene-styrene (SBS), styrene-isoprene (SI), styrene-isoprene-styrene (SIS), styrene-isoprene/butadiene (S-I/B), styrene-isoprene/butadiene-styrene (SIBS), styrene-butadiene/styrene (S-B/S), styrene-butadiene/styrene-styrene (S-B/S-S), styrene-isoprene/styrene (S-I/S), styrene-isoprene/styrene-styrene (S-I/S-S), and mixtures thereof.

In embodiments, the polymer block A has a molecular weight (Mₚ) of 3 - 45, or 3.5 - 30, or 4 - 25, or 4.5 - 20, or 5 - 15, 5 - 10 kg/mol.

In embodiments, the polymer block B has a molecular weight (Mₚ) of 5 - 400, or 10 - 250, or 15 - 150, or 5 - 80, or 20 - 70 kg/mol.

In embodiments, the SBC has a molecular weight (Mₚ) of 8 - 445, or 50 - 300, or 60 - 200, or 70 - 150, or 80 - 120 kg/mol.

In embodiments, the SBC has a polystyrene content (PSC) of 8 - 45, or 10 - 40, or 12 - 35, or 14 - 30, 15 - 25 wt.%, based on the total weight of the SBC.

In embodiments, the SBC has an order-disorder-transition temperature (ODT) of < 300°C, or 150 - 300°C, or 170 - 280°C, or 180 - 260°C, 190 - 250°C.

In embodiments, the SBC has a rubbery aliphatic methyl index (RAMI) of 18 - 38, or 19 - 36, or 20 - 35, or 22 - 34, or 25 - 32.

In embodiments, the SBC has a solution viscosity at 25 wt.% in toluene at 25°C of ≤ 1800 mPa.s, or < 1600 mPa.s, or < 1400 mPa.s, or 50 - 1800 mPa.s, or 80 - 1200 mPa.s.

In embodiments, the SBC is present in the polymer composition in an amount of > 5 wt. %, or < 87 wt. %, or 5-87 wt.%, or 7-80 wt.%, or 12-70 wt.%, or 15-60 wt.%, or 25-55 wt.% based on the total weight of the polymer composition.

HSBC as a Component: In embodiments, the SBC is a hydrogenated block copolymer (HSBC) of the formula A-B, A-B-A, (A-B)ₙX. X is coupling agent residue, and n is an integer from 2 to about 30. The block copolymer is hydrogenated, meaning the hydrogenated conjugated diene has a hydrogenation level of 95-99%, or > 95%, or > 97%, or > 98%.

In embodiments, the HSBC is selected from the group of styrene-ethylene/butylene-styrene (S-E/B-S), styrene-ethylene/propylene (S-EP), styrene-ethylene/butylene (S-E/B), styrene-ethylene/propylene-styrene (S-EP-S), styrene-ethylene/ethylene/propylene-styrene (S-E/EP-S), styrene-ethylene/butylene/styrene-styrene (S-E/B/S-S), and mixtures thereof.

In embodiments, each polymer block A has a molecular weight of 5-20 kg/mol, or 9-12 kg/mol, or at least 9.0 kg/mol, or at least 8.5 kg/mol, or at least 5.0 kg/mol, for each of the polymer block(s). In embodiments, each polymer block B has a molecular weight of 30-200 kg/mol, or 35-175 kg/mol, or 45-150 kg/mol, or at least 30 kg/mol, or at least 35 kg/mol, or at least 50 kg/mol, for each of the polymer block(s).

In embodiments, the HSBC has a butylene unit ("B") content of 25-80 wt. %, or 25- 75 wt. %, or 20-65 wt. %, or 25-55 wt. % 30-50 wt. %, or >15 wt. %, > 20 wt. %, or < 75 wt.%, based on weight of the HSBC and can be measured, via 1H NMR.

In embodiments, polystyrene content (PSC) content prior to hydrogenation is > 15 wt. %, or 20-70 wt. %, or 25-60 wt. % or 30-55 wt. %, or < 70 wt. %, based on the total weight of the HSBC.

In embodiments, the HSBC has a Mw of 40 - 500 kg/mol, or 50 - 500 kg/mol, or 60 - 400 kg/mol, or 75-250 kg/mol, or 40-250 kg/mol, or < 400 kg/mol or < 300 kg/mol, or < 200 kg/mol.

In embodiments, the SBC is a mixture of unhydrogenated SBC and a HSBC in a ratio ranging from 5:95 to 95:5, or 10:90 to 90:10, or 20:80 to 80:20, or 30:70 to 70:30, or 40:60 to 60:40, or 50:50.

In embodiments, the SBC is a mixture of HSBCs having a general configuration selected from: S-E / B-S, S-EP, S-E / B, S-EP-S, and mixtures thereof. In embodiments, S is a polymerized styrene unit, E / B is polymerized ethylene /butylene unit (after polymerized butadiene hydrogenation), EP is polymerized ethylene-propylene unit (after polymerized isoprene hydrogenation).

(Solvent System): The polymer composition further comprises a solvent system to disperse or dissolve the SBC to full solubility. The solvent system comprises a sufficient amount of DCR as co-solvent for the solvent system to have Hildebrand solubility parameters compatible with the solubility parameter of the SBC (i.e., ±1.0 (cal/cm³)^{1/2} of the SBC's value), ranging from about 7.5 to about 10, or from about 7.9 to about 9.0, or from about 8.1 to about 8.8 (calories/cm³)^{1/2}.

The first solvent is selected from the group consisting of aromatic hydrocarbons, aliphatic hydrocarbons, esters, alcohols, ketones, bio-based solvents such as limonene, d-limonene, l-limonene, terpenes, ethyl lactate, methyl soyate, ethyl soyate, glycerol, ethylene glycols, and mixtures thereof.

In embodiments, the weight ratio of DCR as a co-solvent to the first solvent ranges from 5:95 to 95:5, or 10:90 to 90:10, or 15:85 to 85:15, or 20:80 to 80:20, or 25:75 to 75:25, or 30:70 to 70:30, or 35:65 to 65:35, or 40:60 to 60:40, or 45:55 to 55:45, or 50:50.

In embodiments, the amount of DCR in the polymer composition is in the range of > 10 wt. %, or < 55 wt. %, or 10-55 wt. %, or 15-50 wt. %, or 20-45 wt. %; and the amount of the first solvent in the polymer composition is in the range of > 5 wt. %, or < 80 wt. %, or 5- 80 wt. %, or 10-75 wt. %, or 15-70 wt. %, or 20-65 wt. %, or 25-60 wt. %, or 30-55 wt. %, 35-50 wt. %.

In embodiments, a sufficient amount (> 15 wt.%) of the solvent system is present to fully dissolve the SBC, ensuring complete solubility. In embodiments, depending on the SBC and the solvent system used, the weight ratio of solvent system to SBC is in the range of 98:2 to 2: 98, or 95:5 to 5: 95, or 90:10 to 10:90, or 88:12 to 12:88, or 85:15 to 15: 85, or 80:20 to 20:80, or 75:25 to 25:75 for the solvent system to have a Hildebrand solubility parameter of ±1.0 (cal/cm³)^{1/2} of the polymer's value.

(DCR as Co-solvent): DCR is obtained by decarboxylating a rosin acid, or by dimerizing and decarboxylating a rosin acid and separating / removing the dimerized species. The DCR is in the form of a liquid and can be any of a crude DCR, a distilled or purified DCR, or mixtures thereof. DCR can be hydrogenated and / or functionalized. Crude DCR is DCR containing 5-25 wt.% of higher molecular weight (450-1500 Da) components, e.g., hydrocarbons, oligomers, polymers, impurities, or dimer / trimer of fatty acids. Distilled or purified DCR refers to crude DCR having heavy fractions removed to improve color, reduce sulfur, etc.

In embodiments, the DCR comprises one or more C=C groups, 40 - 100 wt.% of tricyclic compounds having 18 - 20 carbon atoms, 0 - 30 wt.% of components with < 19 carbon atoms, and 40 - 100 wt.% of components with a molecular formula in the range from C₁₉H₂₀ to C₁₉H₃₄, based on the total weight of the DCR.

In embodiments, sum of tricyclic compounds as aromatic and cycloaliphatic in the DCR is > 50 wt.%, or > 55 wt.%, or > 60 wt.%, or > 74 wt.%, or > 90 wt. %, or up to 100 wt.%, or 50-100 wt.%, or 55-100 wt.%, or 60-100 wt.%, or 74-100 wt.%, or 50-95 wt.%, of total weight of the DCR. Aromatic DCR is defined as DCR species having a MW of 252-256, with MW of 254 as having a reactive double bond, and cycloaliphatic DCR is defined as DCR species having a MW of 260 or 262.

In embodiments, the DCR has a C19 (MW 248-262) content of > 50 wt.%, or > 60 wt.%, or > 70 wt.%, or > 80 wt.%. In embodiments, the amount of cycloaliphatic DCR (M_{W} 260 and 262) is > 15 wt.%, or > 20 wt.%, or > 30 wt.%, or > 40 wt. %, or > 50 wt.%, or > 80 wt. %, or 15-90 wt.%, or 15-85 wt.%, or 25-80 wt.%, or 40-80 wt.%, based on the total weight of the DCR.

In embodiments, the total amount of tricyclic compounds having reactive double bond (C=C group) is 1-45 wt.%, or < 40 wt.%, or < 30 wt. %, or <20 wt.%, or < 15 wt.%, or < 10 wt. % of total weight of the DCR. Reactive C=C group is defined as DCR species having a M_{W} of 254 or 258.

In embodiments, the DCR has C19 species with MWs of 254, 250, and 248 in an amount of < 5 wt.%, or < 3 wt.%, or < 1 wt.%, or < 0.5 wt.%, or 0 wt.%.

In embodiments, the DCR has a C13 species with MWs of 174 and 180 in an amount of 5-20 wt.%, or 5-15 wt.%, or > 5 wt.% or < 20 wt.%.

In embodiments, the DCR contains C19 species with a MW of 262 in an amount of 5-20 wt.%, or 5-15 wt.%, or < 25 wt.%, or < 20 wt.%, or < 15 wt.%.

In embodiments, the DCR contains C19 species with a MW of 260 in an amount of 5-25 wt.%, or 10-20 wt.%, or > 5 wt.%, or > 10 wt.%, or > 15 wt.%, or < 20 wt.%.

In embodiments, the DCR contains C19 species with a MW of 256 in an amount of 35-55 wt.%, or 40-50 wt.%, or > 37 wt.%, or > 40 wt.%, or > 45 wt.%.

In embodiments, the DCR contains C19 species with a MW of 252 in an amount of 5 - 20 wt.%, or 5-15 wt.%, > 5 wt.%, or > 10 wt.%.

In embodiments, the DCR contains C13 species with a MW of 180 in an amount of 0-5 wt.%, or 0-3 wt.%, or < 5 wt.%, or < 2 wt.%, or < 1 wt.%, or 0 wt.%.

In embodiments, the DCR contains C13 species with a MW of 174 in an amount of 5-25 wt.%, 5-20 wt.%, or 5-15 wt.%, or > 5 wt.%, or > 10 wt.%, or < 20 wt.%.

The MW of the species in the DCR as measured using the analytical methods previously specified (e.g., MS, MS /GC / HPLC, and GC-MS) can be identified by the following retention profile: MW of 174 g/mol, 7.0 - 8.5 minutes; MW of 180 g/mol, 2.5 - 4.0 minutes; MW of 248 g/mol, 32.5 - 34.5 minutes; MW of 250 g/mol, 26.0 - 31.0 minutes; MW of 252 g/mol, 24.5 - 31.0 minutes; MW of 254 g/mol, 16.5 - 25.0 minutes; MW of 256 g/mol, 16.5 - 25.0 minutes; MW of 260 g/mol, 11.0 - 16.0 minutes; and MW of 262 g/mol, 11.0 - 16.0 minutes. For components with overlapping retention time ranges, the mass spectrum of each peak is used to identify the MW of the component. Components with the same MW (isomers) are clustered and the total amount per isomer is reported.

In embodiments, DCR is characterized as having a m/z (mass/charge) value in the range of 170 - 280, or 220 - 280, or 230 - 270, or 234 - 262, or 235 - 265, or > 230, or < 265, measured by GC-FID-MS.

In embodiments, DCR is characterized as having an oxygen content of < 5%, or < 3%, or < 2%, or < 0.9%, or < 0.5, or < 0.2%, or < 0.1%, or 0-5%, or 0-3%, or 0-2%, or 0-1%. The oxygen content (in %) can be calculated as oxygen to carbon ratio, or the sum of oxygen atoms present divided by sum of carbon atoms present, with the number of oxygen and carbon atoms being obtained from elemental analyses.

In embodiments, the DCR is characterized as having a lower acid value (carboxylic acid content) than the rosin acid feedstock for making the DCR. In embodiments, the DCR has an acid value of < 50, or < 45, or < 40, or < 35, or < 30, or < 25, or < 20, or < 15, or < 10, or < 7, or < 5, or 0.5-40, or 0.5-30, or 0.5-20, or 1-20, or 1-15, or 1-15, 1-10 mg/KOH, as measured using ASTM D1240-14 (2018) or ASTM D465.

In embodiments, the DCR has a density of 0.9-1.0, or 0.91-0.99, or 0.92-0.98, or 0.93-0.97, or 0.94-0.96, or > 0.9, or < 1.1 g/cm³.

In embodiments, the DCR is characterized as having viscosities comparable to those of petrochemical base oils, due in part to its relatively high molecular weights, for example, a viscosity of 15-60, or 18-55, or 20-50, or 22-48, or 25-45, or 28-42, or 30-40, or > 20, or > 25, or > 28, or < 45, or < 50 cSt according to ASTM D-445, measured at 40°C.

In embodiments, the DCR has an aniline point of 3-40°C, or 5-40°C, or 5-30°C, or 5-25°C, or 2-20°C, or 5-20°C, or 5-15°C, or < 25°C, or < 20°C, or >3°C , or > 5°C, or > 8°C, according to ASTM D611.

In embodiments, the DCR has a pour point of -40 to +10°C, or -35 to +8°C, - 30 to +5°C, or -30 to +0°C, or -30 to -5°C, or -28 to 0°C or -28 to -5°C, or -28 to -10°C, or > -30°C, or > -28°C, or < +5°C, according to ASTM D97.

In embodiments, the DCR has a flash point of 135-175°C, or 135-165°C, or 135-160°C, or 140-175°C, or 140-160°C, or 140-158°C, or 140-155°C, or >135°C, or > 140°C, or < 175°C, or < 165°C, or < 160°C, according to ASTM D92.

In embodiments, the DCR has a boiling point of 200 - 390°C, or 210 - 390°C, or 235 - 390°C, or 280 - 380°C, or 290 - 370°C, 300 - 360°C, or > 290°C, or > 230°C, > 210°C, or < 400°C, or < 370°C, measured according to D2887.

In embodiments, the DCR has a Gardner Color of 0 - 12.0, or 0.5 - 12.0, or 0.8 - 12.0, or 0.9 - 11, or 1.0 - 10.0, or 1.0 - 6.0, or 1.0 - 5, or > 0, or > 1.0, or > 1.2, or < 10.0, or < 7.0, or < 6.0, or <5.0, or < 2.4, or < 3.0, according to ASTM D6166.

In embodiments, the DCR has a sulfur content of < 500 ppm (0.05 wt.%), or < 300 ppm (0.03 wt.%), or < 200 ppm (0.02 wt.%), or < 100 ppm (0.01 wt.%), or < 10 ppm (0.001 wt.%), or 20-700 ppm (0.002-0.7 wt.%), 30-500 ppm (0.003-0.5 wt.%), or 40-400 ppm (0.004-0.4 wt.%), or 40-300 ppm (0.004-0.3 wt.%), or 40-200 ppm (0.004-0.2 wt.%), based on the total weight of the DCR, measured according to ASTM D5453.

In embodiments, the DCR has a VOC of < 5, or < 4.75, or < 4.5, or < 4.25, or < 4.0, or < 3.75, or < 3.5, or < 3.25, or < 3.0, or < 2.75, or < 2.5, or < 2.25, or < 2.0, or < 1.5, or < 1.0, or < 0.5 wt.%, based on the total weight of the DCR. The VOC of the DCR is measured according to methods: i) summing the percentage by weight contribution from all VOCs present in the product at 0.01% or more, or ii) according to the EPA (Environmental Protection Agency) method 24 or equivalent.

In embodiments, the DCR has a Kb (Kauri butanol) value of 25 - 90, or 30 - 85, or 35 - 80, or 40 - 75, or 45 - 70, or 50 - 65, or > 40, or > 50, or > 60, or > 70, or > 80, according to ASTM D1133.

In embodiments, the DCR has a viscosity index of < -100, or < -110, or < - 115, or < -120, measured according to ASTM D2270. The viscosity index is an arbitrary, unit-less measure of a fluid's change in viscosity relative to temperature change, for example, index of viscosity at 40 °C and viscosity at 100 °C.

In embodiments, the DCR has a δD value of 14 - 18, or 14.2 - 17.8, or 14.5 - 17.5, or 15 - 17, or 15.2 - 16.5; a δP value of 3 - 6, or 3.2 - 5.5, or 3.4 - 5.2, or 3.5 - 5.0; and δH value of 7 - 10, or 7.5 - 9.5, or 8 - 9, or 8.2 - 8.8 MPa^{1/2}.

In embodiments, the DCR has a surface tension of 25 - 50, or 28 - 45, or 30 - 40 dynes/cm, according to ASTM D1331.

In embodiments, the DCR (co-solvent) is present in an amount of 3-30 wt. % or > 3, or > 5, or > 7, or > 10, or > 15, or < 30, or < 25 wt. % based on the total weight of the SBC.

(Tackifier): The polymer composition further comprises a tackifier, which can be hydrogenated or partially hydrogenated. In embodiments, a partially hydrogenated tackifier serves as a compatibilizer and / or plasticizer. A partially hydrogenated tackifier can help with the blending of the adhesive components. A partially hydrogenated tackifier can also help homogenize the blends of SBC's and provide adhesion at an acceptable moderate level.

Examples of tackifiers include, e.g., aliphatic and cycloaliphatic C₅ / C₉ hydrocarbon resins, mixed aromatic and aliphatic modified hydrocarbon resins, aromatic modified aliphatic hydrocarbon resins, and aromatic modified aliphatic hydrocarbon resins (partially) hydrogenated version, partially or fully hydrogenated C₉ hydrocarbon resins, terpenes, modified terpenes, polyterpenes, hydrogenated terpenes version and combinations thereof, modified rosin esters and copolymers and terpolymers of natural terpenes (e.g., styrene-terpene, alpha-methyl styrene-terpene, and vinyl toluene-terpene), phenolic-modified terpene resins and combinations thereof.

In embodiments, the tackifier is present in an amount of 5 to 75 wt. %, or 10 to 65 wt.%, or 12 to 60 wt.%, or 20 to 50 wt.%, or > 5 wt. %, or < 75 wt. % based on the total weight of the polymer composition.

(Optional Additives): In embodiments, the polymer composition optionally includes additional components including, e.g., antioxidants, adhesion promoters, crosslinking agents, ultraviolet light stabilizers, rheology modifiers, biocides, corrosion inhibitors, dehydrators, colorants (e.g., pigments and dyes), fillers, surfactants, flame retardants, and combinations thereof.

In embodiments, antioxidants are selected from but not limited to, e.g., pentaerythritol tetrakis[3,(3,5-di-tert-butyl-4-hydroxyphenyl)propionate], 2,2'-methylene bis(4-methyl-6-tert-butylphenol), phosphites including, e.g., tris- -nonylphenyl)-phosphite (TNPP) and bis(2,4-di-tert-butylphenyl)4,4'-diphenylene-diphosphonite, di-stearyl-3,3'-thiodipropionate (DSTDP), Butylated hydroxytoluene (BHT), butylated hydroxyanisole (BHA), tertiary-butylhydroquinone (TBHQ) and combinations thereof.

In embodiments, additives are present in an amount of 0.1 - 35, or 0.5 - 30, or 0.8 - 25, or 1 - 20, or 2- 10, or > 0.1, or < 35 wt.%, based on the total weight of the polymer composition.

(Method of Forming a Polymer Composition): The polymer composition is prepared by dissolving the SBC in the solvent system in the desired ratios as discussed above. When the SBC comprises a blend of two or more polymers, it is preferred for the polymers to be mixed in an extruder prior to being dissolved in the solvent system. In embodiments, blends of two or more polymers can be dissolved in the solvent system without being extruder blended.

In one embodiment, depending upon the end use application e.g., hot melt adhesive, other components are mixed at an elevated temperature e.g., 150-250 °C, before the first solvent and a first solvent are incorporated into the formulation at an ambient temperature.

In embodiments, the polymer composition comprises, 5-87 wt. % of at least a styrenic block copolymer (SBC)selected from an unhydrogenated styrenic block copolymer, a partially hydrogenated styrenic block copolymer (p-HSBC), a fully hydrogenated styrenic block copolymer (HSBC), and mixtures thereof, 12-60 wt.% of a tackifier, and 0.1-35 wt.% of at least an additive. In embodiments, the polymer is fully dissolved in a solvent system containing a mixture of a first solvent and DCR (co-solvent) at a DCR to first ratio of 20:80 to 80:20 (3-30 wt. % of a co-solvent, 5-35 wt. % of a first solvent).

(Properties of Polymer Composition): The polymer composition is characterized as having improved mechanical and thermal properties suitable for use in high-performance applications. The polymer composition has one or more of the following properties:
a softening point of 40 to 160 °C, or < 150 °C, or < 135 °C, or < 120 °C, or > 105 °C, or > 100 °C, or > 98 °C, or > 75 °C as determined by a ring and ball test according to ASTM method E28.
a vertical slump of 1.27 - 25.4 mm (0.05 - 1 inch), or 2.54 - 22.86 mm (0.1-0.9 inch), or 5.08-20.32 mm (0.2-0.8 inch), 7.62-17.78 mm (0.3- 0.7 inch), or < 25.4 mm (1 inch), or > 1.27 mm (0.05 inch) according to ASTM C639-15; and
a tack-free time of 1- 120 min, or <120 min, or < 100 < or < 75 min, or < 50 min, or < 40 min, or < 30 min, or > 1 min, or > 3 min, or > 5 min, or 1-15 min according to ASTM C679-15.

(Applications): The polymer composition is suitable for applications in adhesives, tapes, labels, and medical products. The composition is also suitable for automotive components such as gaskets, seals, insulations, etc. Gaskets and products formed from the composition are applicable to gaskets for electronics such as drum washing machines, dishwashers, driers and vacuum / steam cleaners, motor vehicle parts, medical supplies, household appliances, office supplies, leisure supplies, etc. It can be further used in applications including disposable nonwoven hygienic articles, paper converting, flexible packaging, woodworking, carton, case sealing, and other assembly applications. The composition is also useful in a variety of processes used to bond a first substrate to a second substrate in lamination processes, e.g., laminating porous substrates to polymer films, porous substrates to porous substrates, polymer films to polymer films, and combinations thereof.

The composition is also suitable in the manufacture of a variety of construction materials, notably in the field of plywood and laminated construction materials. Adhesives and sealants are also finding increasing applications in building construction and assembly operations as at least partial substitutes for mechanical fasteners.

In embodiments, the polymer composition is used as a polymer composition, for use as an adhesive in disposable diapers and feminine sanitary napkin construction, diaper, and adult incontinent brief elastic attachment, diaper and napkin core stabilization, diaper back sheet lamination, industrial filter material conversion, surgical gown, surgical drape assembly, etc. In embodiments, the composition is used in application other than just a sealant, e.g., coatings - decorative, barrier coatings, and roof coatings, etc.

(Examples): The following illustrative Examples are intended to be nonlimiting.

The following test methods are used.

Melt flow rates (MFR) are measured according to ASTM-D1238.

Vertical slump testing according to ASTM C639-15.

The components used in the Examples include:
Tackifier-1 is a partially hydrogenated C₅ / C₉ hydrocarbon resin (mixed aliphatic/aromatic resins) with glass transition temperature of 49 °C and softening point of 100 °C, and a molten Gardner color of < 1, a melt viscosity of 200 cP (ASTM D3236).
Tackifier-2 is an aromatic hydrocarbon resin with glass transition temperature of 90 °C and softening point of 140 °C.
Antioxidant - a sterically hindered phenolic primary antioxidant having Mw of 1178 g/mol, density at 20°C of 1.15 g/ml, MP of 110-125°C.
SBC-1 is a linear triblock copolymer based on styrene and ethylene / butylene having a formula of S-E/B-S, with a polystyrene content of 31%, a melt index of 28 g/10 min. at 230 °C (2.16kg), a styrene / rubber ratio of 31/69, and having a molecular weight (M_{W}) of 40-100 kg/mol.
SBC-2 is a diblock copolymer based on styrene and ethylene-propylene having a formula of S-EP, with a melt index of < 1 g/10 min. at 230 °C (5 kg), a styrene / rubber ratio of 37/63, an elongation at break of 100% (ASTM D-412), and having a molecular weight (M_{W}) of 100-200 kg/mol.
SBC-3 is a coupled hydrogenated styrenic block copolymer having a formula (S-E/B/S)ₙX, with vinyl aromatic content of 42 wt. %, shore hardness A of 65, and peak molecular weight (Mp) of 140 kg/mol, residual unsaturation of 0.1 meq/g, S block Mp of 10.6 kg/mol, E/B/S block Mp of 118.8 kg/mol (after coupling), and E to B mole ratio of 62:38.

(Examples): The polymer (sealant) compositions / formulations are prepared in order to make a sealant based on the components in Table 1, with the components being mixed together for Examples 1-6.

Example 1: A solution was prepared by dissolving 14.1 wt.% of SBC-1 and 6.8 wt.% of SBC-2 copolymers in 30 wt.% of a toluene/PCBTF solvent mixture (6 wt.% toluene, 24 wt.% PCBTF) in a flask. Once the copolymers were fully dissolved (> 90 wt.%), the resulting solution exhibited a viscosity slightly greater than that of water. The solution was stirred continuously until a homogeneous mixture was formed. Next, 34 wt.% of tackifier-1 and 14.4 wt.% of tackifier-2 were added to the homogeneous solution with further stirring. Subsequently, 0.7 wt.% of an antioxidant was incorporated into the mixture, and stirring continued at room temperature. The composition was then allowed to be cured by drying the solvent mixture over a sufficient period (e.g., approximately one week). Once solidified, the sample was collected for further testing.

Example 2: Example 1 was repeated, except that SBC-1 and SBC-2 copolymers were dissolved in a solvent mixture consisting of 30 wt.% DCR and methyl acetate in a 1:1 ratio (15 wt.% DCR, 15 wt.% methyl acetate).

Example 3: Example 1 was repeated except that SBC-1 and SBC-2 copolymers were dissolved in a solvent mixture consisting of 30 wt.% DCR and methyl acetate in a 0.8:1.2 ratio (12 wt.% DCR, 18 wt.% methyl acetate).

Example 4: Example 1 was repeated except that SBC-1 and SBC-2 copolymers were dissolved in a solvent mixture consisting of 30 wt.% DCR and methyl acetate in a 0.4:1.6 ratio (6 wt.% DCR, 24 wt.% methyl acetate).

Example 5 (comparative): Example 1 was repeated except that SBC-1 and SBC-2 copolymers were dissolved in a solvent mixture consisting of 30 wt.% by the weight of d-limonene and methyl acetate in 1:1 ratio (15 wt.% D-limonene, 15 wt. % methyl acetate).

Example 6 (comparative): Example 1 was repeated except that SBC-1 and SBC-2 copolymers were dissolved in a solvent mixture consisting of 30 wt.% by the weight of d-limonene and methyl acetate in 0.8:1.2 ratio (12% D-limonene, 18% methyl acetate).

Example 7- Example 1 was repeated except that SBC-3 was dissolved in a solvent mixture consisting of 30 wt.% by the weight of d-limonene and methyl acetate in 0.8:1.2 ratio (12% D-limonene, 18% methyl acetate).

**Table 1**

| Examples (Exam) | Exam 1 (wt. %) | Exam 2 (wt. %) | Exam 3 (wt. %) | Exam 4 (wt. %) | Exam 5 (wt.%) Comparative | Exam 6 (wt.%) Comparative |
|---|---|---|---|---|---|---|
| SBC-1 (SE/BS) | 14.1 | 14.1 | 14.1 | 14.1 | 14.1 | 14.1 |
| SBC-2 (S-EP) | 6.8 | 6.8 | 6.8 | 6.8 | 6.8 | 6.8 |
| Tackifier-1 | 34.0 | 34.0 | 34.0 | 34.0 | 34.0 | 34.0 |
| Tackifier-2 | 14.4 | 14.4 | 14.4 | 14.4 | 14.4 | 14.4 |
| Antioxidant | 0.7 | 0.7 | 0.7 | 0.7 | 0.7 | 0.7 |
| Toluene | 6.0 | - | - | - | - | - |
| *PCBTF | 24.0 | - | - | - | - | - |
| co-solvent (DCR) | - | 15.0 | 12.0 | 6.0 | - | - |
| first solvent (methyl acetate | - | 15.0 | 18.0 | 24.0 | 15.0 | 18.0 |
| D-limonene | | | | | 15.0 | 12.0 |

| | | | | | | |
|---|---|---|---|---|---|---|
| **PCBTF- para-chlorobenzotriflouride* | | | | | | |

Table 2 presents the properties of Examples 1-6. The softening point of Examples 1-4 increases as the methyl acetate concentration rises. The polymer composition in Example 1, which contains PCBTF, does not fully solidify after one week, resulting in a soft gel-like sample. Additionally, the tack-free time is significantly longer for Examples 5 and 6, which contain d-limonene. Compared to formulations containing DCR, the compositions with d-limonene cure at a slower rate.

**Table 2**

| Examples | R&B Softening Point, 1 week cure (°C) | Vertical Slump at RT, 6 hours (inches) | Vertical Slump at RT, 24 hours (inches) | Tack Free Time (minutes) |
|---|---|---|---|---|
| Exam 1 | < 30 | 0.5 | 0.7 | 15 |
| Exam 2 | 84.6 | 0.1 | 0.1 | 15 |
| Exam 3 | 88.9 | 0.1 | 0.2 | 5 |
| Exam 4 | 98.6 | 0.1 | 0.2 | 5 |
| Exam 5 | 66.2 | 0.5 | 0.6 | 120 |
| Exam 6 | 76.5 | 0.1 | 0.2 | 30 |

As used herein, the term "comprising" means including elements or steps that are identified following that term, but any such elements or steps are not exhaustive, and an embodiment can include other elements or steps. "Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

## Claims

1. A polymer composition comprising:
(a) 5-87 wt.% of at least a styrenic block copolymer (SBC) selected from the group consisting of: unhydrogenated styrenic block copolymer, partially hydrogenated styrenic block copolymer (p-HSBC), hydrogenated styrenic block copolymer (HSBC), and mixtures thereof;
(b) 12-60 wt.% of a tackifier; and
(c) 0.1-35 wt.% of at least an additive;
wherein the SBC is fully dissolved at a rate of > 90 wt.% in a solvent system, the solvent system containing:
a first solvent selected from aromatic hydrocarbons, aliphatic hydrocarbons, esters, alcohols, ketones, and mixtures thereof; and
a decarboxylated rosin (DCR) as a co-solvent at a DCR to first ratio of 20:80 to 80:20; and
wherein the DCR is characterized as having:
one or more C=C groups;
> 50 wt.% tricyclic aromatic and tricyclic cycloaliphatic compounds, based on total weight of the DCR;
> 15 wt. % tricyclic cycloaliphatic compound, based on total weight of the DCR; and
40 to 100 wt.% of tricyclic aromatic and tricyclic cycloaliphatic compounds have 18 to 20 carbon atoms.

2. The polymer composition of claim 1, wherein the SBC has a solubility of < 90 wt.% in the first solvent.

3. The polymer composition of any of claims 1-2, wherein the first solvent is an aromatic hydrocarbon or an aliphatic hydrocarbon selected from the group consisting of isoprene, hexane, heptane, liquid styrene monomer, xylene, siloxanes, toluene, parachlorobenztriflouride, methylcyclohexane, cyclohexane, 2,2-dichloropropane, methylene chloride, and mixtures thereof.

4. The polymer composition of any of claims 1-2, wherein the first solvent is an ester selected from the group consisting of isobutyl acetate, isopropyl acetate, butyl acetate, propyl acetate, methyl acetate, ethyl acetate, propylene carbonate, and mixtures thereof.

5. The polymer composition of any of claims 1-2, wherein the first solvent is a ketone selected from the group consisting of acetone, diisobutyl ketone, diisopropylketone, methyl isobutyl ketone, methyl isopropyl ketone, methyl cyclohexanone, cyclohexanone, and mixtures thereof.

6. The polymer composition of any of claims 1-2, wherein the first solvent an alcohol selected from the group consisting of butanal, pentaldehyde, hexaldehyde, heptaldehyde, octanal, nonanal, and decaldehyde. diethyl ether, dimethyl ether, diethylene glycol, 2-ethythexanol, mineral spirits, naphtha, amides, glycol ether, and mixtures thereof.

7. The polymer composition of any of claims 1-6, wherein the tackifier is selected from the group consisting of: aliphatic and cycloaliphatic hydrocarbon resins, mixed aromatic and aliphatic modified hydrocarbon resins, aromatic modified aliphatic hydrocarbon resins, partially hydrogenated aromatic modified aliphatic hydrocarbon resins, partially or fully hydrogenated hydrocarbon resins, terpenes, modified terpenes, hydrogenated terpenes, modified rosin ester, styrene-terpene, alpha-methyl styrene-terpene, vinyl toluene-terpene, phenolic-modified terpene resin and combinations thereof.

8. The polymer composition of any of claims 1-7, wherein the DCR is characterized as having:
a Kb value of 25-90, measured according to ASTM D1133;
a density of 0.9 to 1.0 g/cm³ at 20°C;
a viscosity of 15 to 60 cSt at 40°C, measured according to ASTM D-445; and
an acid value of < 50 mg KOH/g, as measured according to ASTM D1240-14.

9. The polymer composition of any of claims 1-8, wherein the styrenic block copolymer has a configuration selected from the group consisting of: A-B, A-B-A, (A-B)ₙX, (A-B-A)ₙX, and mixtures thereof,
wherein,
n is a positive integer;
X is a residue of a coupling agent;
each A block is derived from a vinyl aromatic monomer; and
each B block is derived from a conjugated diene monomer.

10. The polymer composition of claim 1-9, wherein the styrenic block copolymer has a molecular weight (Mₚ) of 8 - 445 kg/mol.

11. The polymer composition of claim 1-10, wherein the styrenic block copolymer has a polystyrene content (PSC) of 8 - 45, and a vinyl content of 25 - 80 wt. % based on the total weight of the SBC measured via 1H NMR.

12. The polymer composition of any of claims 1-11, wherein the styrenic block copolymer is a hydrogenated styrenic block copolymer having a general configuration selected from the group consisting of: S-E/B-S, S-EP, S-E/B, S-EP-S, and mixtures thereof;
wherein:
each S block is derived from a vinyl aromatic monomer;
each E/B block is an ethylene-butylene block; and
each EP block is an ethylene-propylene block.

13. The polymer composition of any of claims 1-12, wherein the styrenic block copolymer is blend of a first hydrogenated styrenic block copolymer having a configuration of S-E/B-S and a second hydrogenated styrenic block copolymers having a configuration of S-EP,
wherein each S block is derived from a vinyl aromatic monomer,
each E/B block is an ethylene-butylene block, and
each EP block is an ethylene-propylene block; and
wherein each of the first and second hydrogenated styrenic block copolymers has:
a polystyrene content prior to hydrogenation of 25-60 wt.%; and
a MW of 40-250 kg/mol.

14. The polymer composition of claim 13, wherein the weight ratio of the first hydrogenated styrenic block copolymer to the second hydrogenated styrenic block copolymer ranges from 5:95 to 95:5.

15. The polymer composition of any of claims 1-14, wherein the polymer composition has at least one of:
a softening point of 40 - 160 °C according to ASTM method E28;
a vertical slump of 1.27 - 25.4 mm (0.05 - 1 inch) according to ASTM C639-15; and
a tack-free time of 1 - 120 min according to ASTM C679-15.
